## Europäisches Patentamt

## European Patent Office

## Office européen des brevets

(11) Veröffentlichungsnummer: **0 189 020**
**B1**

(12) **EUROPÄISCHE PATENTSCHRIFT**

(45) Veröffentlichungstag der Patentschrift:
**22.06.88**

(21) Anmeldenummer: **85890254.7**

(22) Anmeldetag: **09.10.85**

(51) Int. Cl.⁴: **F 24 D 3/14**

(54) Montageplatte für Fussbodenheizungen.

(30) Priorität: **09.10.84 DE 8429708 U**

(43) Veröffentlichungstag der Anmeldung:
**30.07.86 Patentblatt 86/31**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**EP - A - 0 023 042**
**AT - B - 361 185**
**DE - A - 2 840 148**
**DE - A - 2 840 149**
**DE - A - 2 911 982**
**DE - C - 3 024 208**
**DE - U - 7 902 301**

(73) Patentinhaber: **Kurt Hirsch Kunststoffwerk Gesellschaft m.b.H., Nr. 58, A-9555 Glanegg Kärnten (AT)**

(72) Erfinder: **Hirsch, Kurt, Linsengasse 55, A-9020 Klagenfurt Kärnten (AT)**

(74) Vertreter: **Beer, Otto, Dipl.-Ing. et al, Lindengasse 8, A-1071 Wien (AT)**

ACTORUM AG

**Beschreibung**

Die Erfindung betrifft eine Montageplatte für die Rohre von Fussbodenheizungen mit in Gebrauchslage an der Oberseite nach oben ragenden Vorsprüngen, zwischen welche die Heizungsrohre festklemmbar sind, wobei die Montageplatte und ihre Vorsprünge, vorzugsweise einstückig, aus Kunstschaumstoff, insbesondere Polystyrolschaum, bestehen, die Vorsprünge und die zwischen den Vorsprüngen angeordneten Bereiche der Oberseite der Montageplatte mit einer Folie aus warm verformbarem Kunststoff überzogen sind.

Neben der Befestigung von Rohren für Fussbodenheizungen an unter dem Estrich verlegten (Bau-)-Stahlgittern unter Verwendung von Befestigungsklemmen ist es bekannt, für die Befestigung von Rohren von Fussbodenheizungen Montageplatten zu verwenden. Derartige Montageplatten, wie sie beispielsweise aus der AT-B-361 185 bekannt sind, besitzen in Gebrauchslage an der Oberseite nach oben ragende Vorsprünge, zwischen welchen die Heizungsrohre festklemmbar sind. Die bekannten Montageplatten und ihre Vorsprünge bestehen einstückig aus Kunstschaumstoff, insbesondere Polystyrolschaum. Nachteilig bei diesen bekannten Montageplatten ist es, dass sie die für einen sicheren Halt der Rohre erforderliche Festigkeit nicht besitzen und darüber hinaus die Vorsprünge beim Verlegen der Fussbodenheizungsrohre leicht abbrechen. Zusätzlich haben die bekannten Montageplatten den Nachteil, dass sie mehr oder weniger wasserdurchlässig sind, so dass das aus Festigkeitsgründen geforderte nasse Abbinden der Estrichmasse nicht gewährleistet ist.

Weiters sind aus Kunststoffolien geformte Montagehilfen für Fussbodenheizungsrohre vorgeschlagen worden, die sich aber in der Praxis nicht durchgesetzt haben, da sie nicht hinreichend trittfest sind und durch die Notwendigkeit, eine entsprechend dicke Kunststoffolie zu verwenden, in der Herstellung und von der Materialseite her teuer sind.

Eine Montageplatte mit den Merkmalen des Oberbegriffes von Patentanspruch 1 ist aus der DE-A-2 840 148 und der DE-A-2 911 982 bekannt. Aus keinem der beiden Dokumente ist ein Hinweis darauf zu entnehmen, dass die Folie mit der Montageplatte durch Verschmelzen verbunden sein kann.

Der Erfindung liegt die Aufgabe zugrunde, eine Montageplatte der eingangs genannten Gattung anzugeben, die leicht herzustellen ist und allen Anforderungen an eine Montageplatte für Fussbodenheizungsrohre gerecht wird.

Erfindungsgemäss wird dies dadurch erreicht, dass die Folie mit den Oberflächen der Montageplatte und der Vorsprünge verschmolzen ist.

Dadurch, dass die erfindungsgemässe Montageplatte aus Kunstschaumstoff mit der Kunststoffolie verschmolzen ist, werden einerseits die günstigen Eigenschaften (Dämmung) und die leichte Herstellbarkeit von Montageplatten aus Kunstschaumstoff aufrechterhalten. Anderseits werden durch die Verschmelzung die Montageplatte und insbesondere die an ihr vorgesehenen Montagevorsprünge ausserordentlich fest. Dadurch wird auch erreicht, dass die für den sicheren Halt der Rohre der Fussbodenheizung nötige Klemmkraft von den Vorsprüngen der Montageplatte ohne weiteres aufgebracht wird.

Mit Vorteil kann im Rahmen der Erfindung vorgesehen sein, dass die Montageplatte einschliesslich der Vorsprünge und die Folie aus dem gleichen Kunststoff, insbesondere aus Polystyrol, bestehen.

In einer Ausführungsform der Erfindung kann vorgesehen sein, dass an den Rändern der Montageplatte vorgesehene Anformungen, über welche aneinandergrenzende Montageplatten miteinander verbindbar sind, im Bereich der Folie angeordnet sind.

Aus der DE-A-2 911 982 ist es bekannt, Montageplatten wie im Oberbegriff des Anspruches 4 angegeben, herzustellen. Mit dem in der DE-A-2 911 982 angegebenen Werkstoffpaar (Polyäthylen-Polyurethan) ist ein Verschmelzen zwischen Folie und Platte nicht erreichbar.

Zur Herstellung der erfindungsgemässen Montageplatte wird ein Verfahren vorgeschlagen, bei dem man die Montageplatte und die an ihrer Oberseite vorgesehenen Vorsprünge mit einer Folie aus warm verformbarem Kunststoff durch Anformen der Folie in erwärmtem, plastisch verformbarem Zustand an die Oberseite der Montageplatte und ihrer Vorsprünge überzieht und welches dadurch gekennzeichnet ist, dass das Anformen derart durchgeführt wird, dass die Folie mit den Oberflächen der Montageplatte und der Vorsprünge verschmilzt.

Weitere Merkmale und Einzelheiten der Erfindung ergeben sich aus der nachstehenden Beschreibung eines bevorzugten Ausführungsbeispieles. Es zeigt:

Fig. 1 in Draufsicht eine Montageplatte,

Fig. 2 die Montageplatte aus Fig. 1 in Seitenansicht,

Fig. 3 eine Einzelheit in vergrössertem Massstab im Schnitt längs der Linie III-III in Fig. 4,

Fig. 4 in Draufsicht eine Einzelheit der Montageplatte,

Fig. 5 in Draufsicht eine weitere Ausführungsform und

Fig. 6 einen Schnitt längs der Linie VI-VI in Fig. 5.

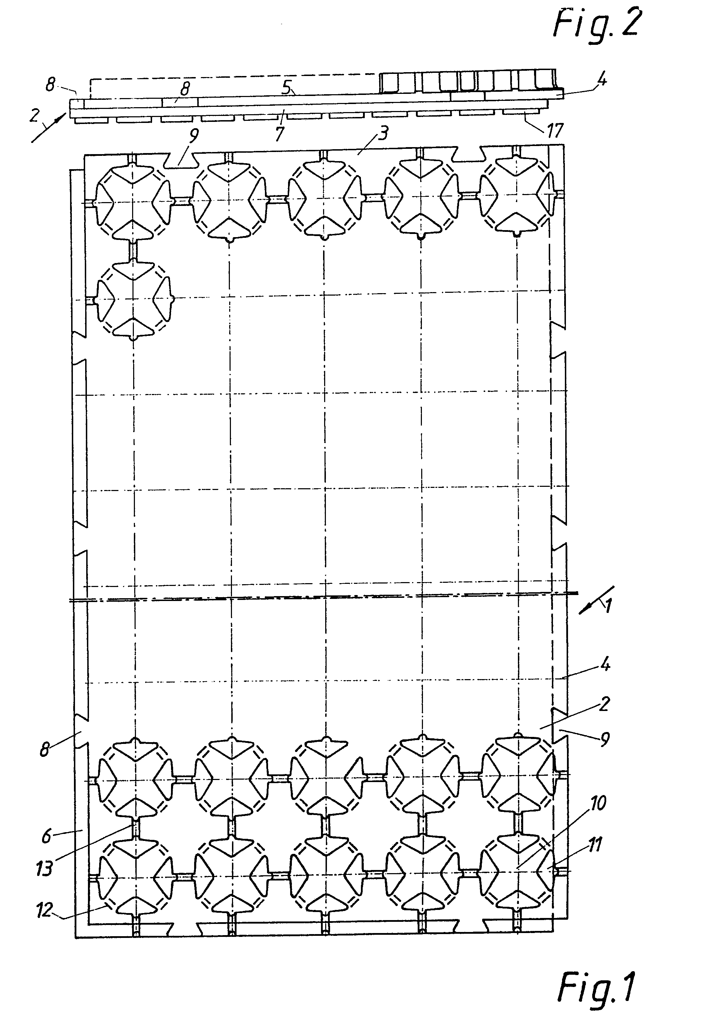

Die in Fig. 1 und 2 gezeigte Montageplatte 1 besteht aus einer Platte 2, die an zwei ihrer Ränder vorspringende Längsrippen 3 bzw. 4 aufweist, wobei diese Rippen im Bereich der Oberseite 5 der Platte 2 liegen. An den gegenüberliegenden beiden Rändern der Platte 2 sind ebenfalls Längsrippen 6 bzw. 7 vorgesehen, die aber im Bereich der Unterseite der Platte 2 liegen, so dass sich zwischen aneinandergrenzenden Montageplatten 1 ein stufenfalzartiger Stoss ergibt. Zur sicheren Verrastung nebeneinanderliegender Montageplatten 1 sind an der Oberseite der Längsrippen 6 bzw. 7 mehrere, sich schwalbenschwanzartig verbreiternde Nocken 8 vorgesehen, die in entsprechend gegengleich geformte, hinterschnittene Ausnehmungen 9 in den Längsrippen 3 und 4 eingreifen, wenn Montageplatten 1 nebeneinander angeordnet werden.

Durch diese besondere Ausbildung der Längsränder der Platte 2 der erfindungsgemässen Montageplatte 1 ergibt sich ein sicherer Zusammenhalt nebeneinander auf einem Unterboden angeordneter Montageplatten 1, ohne dass es besonderer Massnahmen bedarf.

Auf der Oberseite 5 der Platte 2 der Montageplatte 1 sind über die Montageplatte gleichmässig verteilte und im gezeigten Ausführungsbeispiel zu Vierergruppen 10 zusammengefasste Vorsprünge 11 vorgesehen, von welchen in Fig. 1 nur einige gezeigt sind. Zwischen je zwei benachbarten Vorsprüngen 11 sind Ausnehmungen 12 vorgesehen, in welche Rohre einer Fussbodenheizung klemmend eingesetzt werden können.

Zusätzlich sind die Vorsprünge 11 durch die Anordnung von Stützrippen 13 versteift.

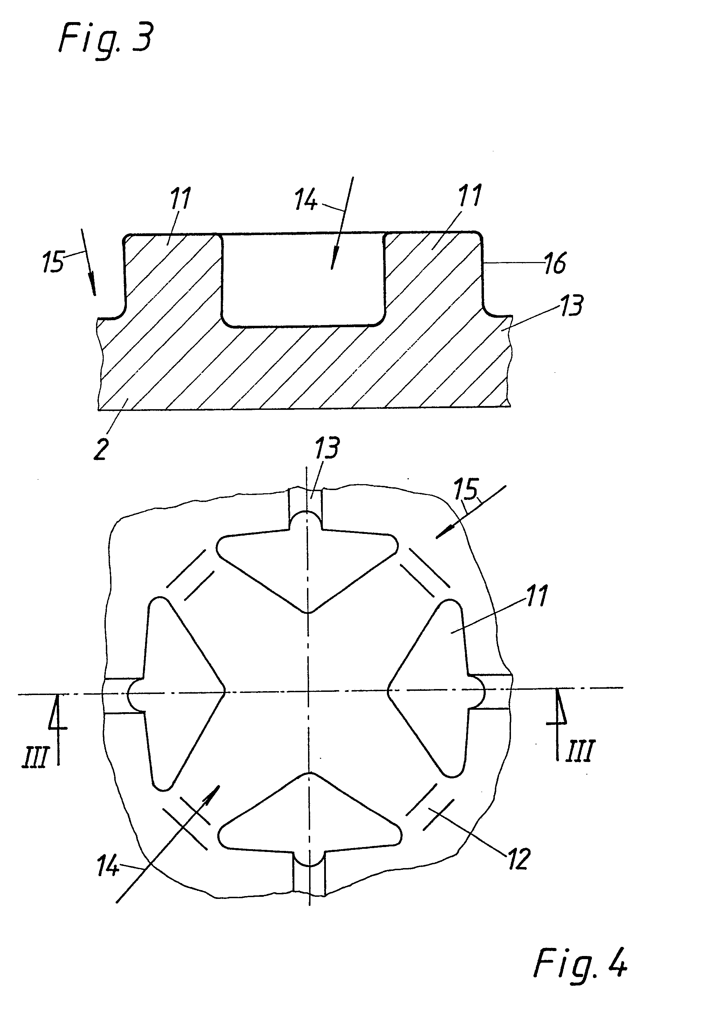

Aus Fig. 3 ist ersichtlich, dass die Vorsprünge 11 mit der Platte 2 einstückig ausgebildet sind, obwohl dies nicht zwingend ist, da die Vorsprünge 11 auch nachträglich an einer Platte 2 angebracht, z.B. angeklebt, angeschweisst usw. werden können. Bevorzugt ist aber eine einstückige Ausbildung der Platte 2 mit ihren Vorsprüngen 11 aus Kunstschaumstoff, vorzugsweise Polystyrolschaum.

Wie Fig. 3 weiters zeigt, sind die Vorsprünge 11 und die zwischen den Vorsprüngen angeordneten Bereiche 14 und 15 der Oberseite 5 der Montageplatte 1 mit einer Folie 16 aus Kunststoff überzogen. Die Folie 16 liegt dicht gegen die Oberflächen der Platte 2 und der Vorsprünge 11 an.

An der Unterseite der Montageplatte können flache Vorsprünge 17 (Fig. 2) angeordnet sein, die beispielsweise eine quadratische Umrissform aufweisen können.

Eine Möglichkeit, die erfindungsgemässe Montageplatte herzustellen, besteht darin, in einer an sich herkömmlichen Form die Platte 2 mit den Vorsprüngen 11 aus Kunstschaumstoff herzustellen und die fertige Platte mit einer warm verformbaren Kunststoffolie 16, beispielsweise einer Folie aus Polystyrol, zu überziehen. Dadurch, dass die Folie im erhitzten Zustand auf die Oberseite der Montageplatte und die Vorsprünge aufgebracht wird, verschmilzt die Folie mit dem Werkstoff der Montageplatte, so dass sich eine besonders gute Versteifung der erfindungsgemässen Montageplatte, insbesondere auch im Bereich der Vorsprünge 11, ergibt. Obwohl nicht zwingend, kann die Folie 16 sich bis in den Beereich der Seitenränder der Platte 2 und die dort vorgesehenen Rippen 3 und 4 bzw. 6 und 7 oder die Nuten 20, 21 bzw. 23, 24 erstrecken.

Durch das Aufbringen der Folie 16 im erwärmten Zustand lässt sich besonders leicht erreichen, dass die Folie 16 mit dem Schaumwerkstoff der Platte 2 und der Vorsprünge 11 oberflächlich verschmilzt, wodurch sich eine besonders innige Verbindung zwischen Folie und Werkstoff der Platte 2 und jenem der Vorsprünge 11 ergibt.

Bei der erfindungsgemässen Montageplatte ergibt sich eine besonders gute Halterung von Rohren für Fussbodenheizungen, da die die Rohre klemmenden Vorsprünge 11 durch die Anordnung der Kunststofffolie verstärkt werden, insbesondere weil diese im erwärmten Zustand aufgebracht und mit dem Plattenwerkstoff verschmolzen ist, so dass die Vorsprünge eine gute Klemmwirkung aufbringen können. Zusätzlich wird erreicht, dass die erfindungsgemässe Montageplatte praktisch flüssigkeitsundurchlässig ist, so dass ein nasses Abbinden einer nach dem Verlegen der Montageplatte 1 und der Fussbodenheizungrohre aufgebrachten Estrichmasse gewährleistet ist.

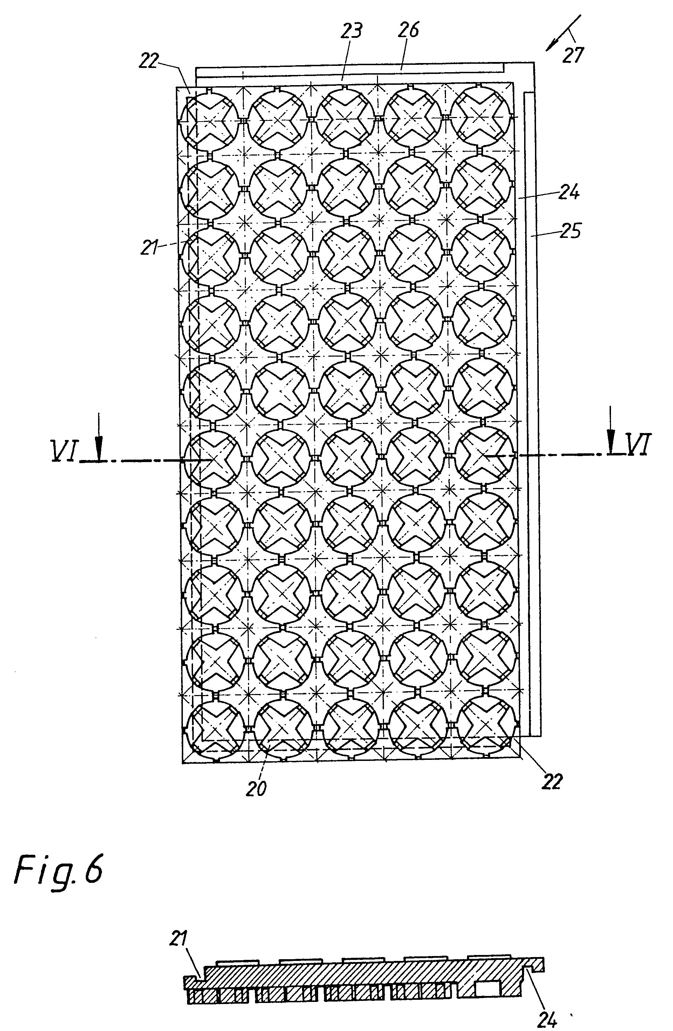

Bei der in den Fig. 5 und 6 gezeigten Ausführungsform der Montageplatte sind diese miteinander über hakenfalzartige Verbindungselemente verbindbar. Dabei sind an zwei sich in einer Ecke treffenden Rändern nach unten offene Nuten 20, 21 vorgesehen, die an ihren Enden durch Querwände 22 verschlossen sind.

An den beiden anderen Rändern sind nach oben offene Nuten 23, 24 vorgesehen. Dabei enden die die Nuten begrenzenden Wände 25, 26 im Abstand von der Ecke 27 der Montageplatte, damit Platz für den Eingriff der Querwände 22 bei aneinandergefügten Montageplatten geschaffen ist.

Die Ausgestaltung der Montageplatten gemäss den Fig. 5 und 6 entspricht im übrigen jener der in den Fig. 1 bis 4 gezeigten Montageplatte.

Bei beiden Ausführungsformen der Montageplatte erstreckt sich die Folie 16 bis über die Randausgestaltungen der Montageplatten (Ränder 3, 4, 5, 6 abzw. Nuten 21 bis 24).

**Patentansprüche**

1. Montageplatte (1) für die Rohre von Fussbodenheizungen mit in Gebrauchslage an der Oberseite (5) nach oben ragendenVorsprüngen (11), zwischen welchen die Heizungsrohre festklemmbar sind, wobei die Montageplatte (1) und ihre Vorsprünge (11) vorzugsweise einstückig aus Kunstschaumstoff, insbesondere Polystyrolschaum, bestehen, die Vorsprünge (11) und die zwischen den Vorsprüngen angeordneten Bereiche (14, 15) der Oberseite (5) der Montageplatte (1) mit einer Folie (16) aus warm verformbarem Kunststoff überzogen sind, dadurch gekennzeichnet, dass die Folie (16) mit den Oberflächen der Montageplatte (1) und der Vorsprünge (11) verschmolzen ist.

2. Montageplatte nach Anspruch 1, dadurch gekennzeichnet, dass die Montageplatte (1) einschliesslich der Vorsprünge (11) und die Folie (16) aus dem gleichen Kunststoff, insbesondere aus Polystyrol, bestehen.

3. Montageplatte nach Anspruch 2, dadurch gekennzeichnet, dass an den Rändern der Montageplatte vorgesehene Anformungen (3 bis 8 bzw. 20 bis 25), über welche aneinandergrenzende Montageplatten miteinander verbindbar sind, im Bereich der Folie (16) angeordnet sind.

4. Verfahren zur Herstellung einer Montageplatte nach einem der Ansprüche 1 bis 3, bei dem man die Montageplatte (1) und die an ihrer Oberseite vorgesehenen Vorsprünge (11) mit einer Folie (16) aus warm verformbarem Kunststoff durch Anformen der Folie (16) in erwärmtem, plastisch verformbarem Zustand an die Oberseite der Montageplatte (1) und ihrer Vorsprünge (11) überzieht, dadurch gekennzeichnet, dass das Anformen derart durchgeführt wird, dass die Folie (16) mit den Oberflächen der Montageplatte (1) und der Vorsprünge (11) verschmilzt.

## Claims

1. An assembly plate (1) for the pipes of a floor heating system comprising projections (11) extending upwards from the upper side (5) when in the operating position and between which the heating pipes can be clamped, the assembly plates (1) and projections (11) preferably being made in one piece of synthetic foam, more particularly polystyrene foam, and the projections (11) and the regions (14, 15) of the upper side (5) of the assembly plate (1) between the projections are covered with a sheet (16) of heat-deformable plastics, characterised in that the sheet (16) is melted and combined with the surfaces of the assembly plate (1) and the projections (11).

2. An assembly plate according to claim 1, characterised in that the assembly plate (1) including the projections (11) and sheet (16) are made of the same plastics, more particularly polystyrene.

3. An assembly plate according to claim 2, characterised in that integrally moulded parts (3 to 8) and 20 to 25) are disposed in the area of the sheet (16) at the edges of the assembly plate, in order to connect adjacent assembly plates.

4. A method of manufacturing an assembly plate according to any of claims 1 to 3, in which the assembly plate (1) and the projections (11) formed at the upper side thereof are covered with a sheet (16) of heat-deformable plastics by integrally forming the sheet (16) in a heated, plastically deformable state on the upper side of the assembly plate (1) and on the projections (11) characterised in that the integrally forming process is such that the sheet (16) melts and combines with the surfaces of the assembly plate (1) and the projections (11).

## Revendications

1. Plaque de montage (1) pour tuyaux de chauffage par le sol ayant, sur sa face supérieure (5), en position d'utilisation, des saillies (11) vers le haut, entre lesquelles peuvent être serrés les tuyaux de chauffage, la plaque de montage (1) et ses saillies (11) étant, de préférence, en une seule pièce, en mousse plastique, en particulier en mousse de polystyrène, et les saillies (11) ainsi que les zones (14, 15) de la face supérieure se trouvant entre les saillies étant recouvertes d'une feuille (16) en matière plastique thermoformable, caractérisée en ce que la feuille (16) est unie par fusion avec les surfaces de la plaque de montage (1) et des saillies (11).

2. Plaque de montage suivant la revendication 1, caractérisée en ce que la plaque de montage (1), y compris les saillies (11) et la feuille (16), sont en une même matière plastique, en particulier du polystyrène.

3. Plaque de montage suivant revendication 2, caractérisée en ce qu'au niveau de la feuille (16), sont prévus, sur les bords de la plaque de montage, des éléments de liaison, (3 à 8 ou 20 à 25), par lesquels des plaques de montage contiguës peuvent être reliées entre elles.

4. Procédé de fabrication d'une plaque de montage suivant une des revendications 1 à 3, dans lequel la plaque de montage (1) et les saillies (11) prévues sur sa face supérieure sont recouvertes d'une feuille (16) en matière plastique thermoformable en moulant cette dernière à l'état chaud et formable plastique sur la face supérieure de la plaque de montage (1) et ses saillies (11), caractérisé en ce que le moulage est effectué de façon que la feuille (16) s'unisse par fusion avec les surfaces de la plaque de montage (1) et des saillies (11).

*Fig. 2*

*Fig. 1*

*Fig. 3*

*Fig. 4*

Fig. 6